# EUROPEAN PATENT SPECIFICATION

(11) **EP 3 832 548 B1**
(45) Date of publication and mention of the grant of the patent: **06.11.2024**
(21) Application number: 19214012.7
(22) Date of filing: 06.12.2019
(51) Int. Cl.: G06N 3/008, G06N 5/022, G06N 5/025, G06N 7/01, G06F 11/36, G06N 5/046, G06N 5/048, G06N 3/047

(54) **METHOD FOR TESTING AND TESTING DEVICE**
VERFAHREN ZUM TESTEN UND TESTVORRICHTUNG
PROCÉDÉ ET DISPOSITIF DE TEST

(43) Date of publication of application: 09.06.2021
(73) Proprietor: Universität Stuttgart, 70174 Stuttgart (DE)
(72) Inventor: WEYRICH, Michael, 70839 Gerlingen (DE); EBERT, Christof, 70569 Stuttgart (DE)
(74) Representative: DREISS Patentanwälte PartG mbB

(56) References cited:
- US-A1- 2014 201 126
- US-A1- 2018 276 278
- WOLSCHKE CHRISTIAN ET AL: "Observation Based Creation of Minimal Test Suites for Autonomous Vehicles", 2017 IEEE INTERNATIONAL SYMPOSIUM ON SOFTWARE RELIABILITY ENGINEERING WORKSHOPS (ISSREW), IEEE, 23 October 2017 (2017-10-23), pages 294 - 301, XP033255396, DOI: 10.1109/ISSREW.2017.46

## Description

The description relates to a method for testing and a testing device, in particular for validation, homologation or certification of an at least partially autonomous apparatus, a component or an operator thereof.

Methods of artificial intelligence are applied to at least partially autonomous devices to enable supervised or unsupervised autonomous operations. To ensure that the apparatus operates within a given legislative framework and within given general conditions, test cases are applied to the device. In a test case a reaction of the apparatus to a test situation is compared to a desired reaction to determine a result of the test.

WOLSCHKE CHRISTIAN ET AL: "Observation Based Creation of Minimal Test Suites for Autonomous Vehicles", 2017 IEEE INTERNATIONAL SYMPOSIUM ON SOFTWARE RELIABILITY ENGINEERING WORKSHOPS (ISSREW), IEEE, 23 October 2017 (2017-10-23), pages 294-301, XP033255396, DOI: 10.1109/ISSREW.2017.46 discloses aspects of such methods.

With currently available testing approaches of brute-force it is both time consuming and resource consuming to ensure that the apparatus operates at all times as expected. It is also difficult to provide transparent record of proof of the safe operation. It is therefore desirable to provide an improved testing scheme.

This is achieved by the method and the device according to the independent claims.

In the description, the term testing refers to validation, certification or homologation of an apparatus or to testing and certification of an operator thereof. Testing in this context may also refer to testing a dynamic system. The testing is applicable in the automotive field as well as in the field of aviation or industrial automation.

The apparatus may be an at least partially autonomous vehicle or a configurable component thereof. The apparatus may be an aircraft or a robot, in particular a mobile robot. The apparatus may be an at least partially autonomous mobile or stationary robot, an at least partially autonomous land vehicle, an at least partially autonomous air borne vehicle, e.g. a drone, or an at least partially autonomous watercraft.

The term principle in the description refers to a principle defined by a legal framework or a general condition. An example for a principle for an at least partially autonomous vehicle may demand exercise maximum diligence when a child is at the side of a road because the child could step onto the lane unexpectedly.

The term action in the description refers to an action that is presented to the apparatus or a user thereof to prompt for a reaction. In a test environment for an operator, the apparatus may prompt the operator via a human machine interface to perform the reaction. A reaction by the operator may directly influence the behavior of the apparatus or may answer a question posed by a test case. For the at least partially autonomous vehicle, the reaction may be defined by a rule indicating to reduce the speed of the vehicle when a child is detected at a side of a road. The term context in the description refers to aspects of an environment and/or a situation in which the apparatus operates. An example for a situation the at least partially autonomous vehicle operates in may be defined by an image depicting a child standing at a side of a road in the context. Likewise, a video sequence showing the child moving at the side of the road in the context may define a situation. The environment may define a weather condition, e.g. summer, winter, twilight, night, rainfall, snowfall.

The term test case refers to an action and the context for the action. The test case can be executed in a simulation environment or in real world environment.

The term scenario in the description refers to a plurality of contexts or contexts that may be combined with an action to form a concrete situation for the scenario. An exemplary scenario defines situations that are defined by the image depicting the child standing at a side of the road in various weather or illumination conditions including but not limited to rain, snow, sunshine, in twilight, at night, at backlight. Likewise, a video sequence showing the child moving at the side of the road in these conditions may define the situation.

The test case according to the following aspects is defined for testing if a principle is met. More specifically, a test case suitable for testing the principle is determined. A device for testing an apparatus or a behavior of a user at an apparatus comprises a selecting arrangement adapted to determine a scenario for testing depending on a probability defined for the scenario in a probability distribution, and to determine a test case depending on the scenario and depending on information about the apparatus, and a testing arrangement adapted to determine an output for the apparatus depending on the test case, detect a response to the test case at the apparatus and to determine a result of the testing depending on the response.

The selecting arrangement is adapted to select a context for the test case from a plurality of contexts defined by the scenario depending on information about the apparatus. The scenario defines a plurality of contexts that are available for testing. Some of these contexts may be useful for testing specific aspects of the apparatus while others are not. In particular, for an apparatus for autonomous driving a scenario may include a situation in various weather conditions such as sunshine, rain, snow, fog, twilight, and backlight. For testing a video camera of the apparatus for autonomous driving, testing in all of the conditions may be useful. For testing a radar sensor of the apparatus for autonomous driving, testing only in sunshine, rain and snow may be selected, because the other conditions have no significant effect on the radar signal.

The selecting arrangement may be adapted to determine at least one context for the scenario from a plurality of contexts depending on a model and to determine an action defined by the model for the at least one context. For certain scenarios it may be useful to test the action in all available contexts. For other scenarios, it may be sufficient to test only in selected contexts. The model maps the scenario for testing the principle to contexts and to determine the action.

The probability distribution may indicate relevancies of scenarios for testing principles, wherein the selecting arrangement is adapted to receive information about a principle and to select a scenario from a plurality of scenarios depending on the probability defined for the scenario in the probability distribution for the plurality of scenarios. Relevant scenarios may be easily selected to determine test cases depending on the principle that shall be tested. The principles and the probability distribution may be part of the model.

In one aspect, the testing arrangement is adapted to output a context of the test case, to observe a reaction at the apparatus, to compare the reaction at the apparatus with the actions defined in the test case, and to output the result of the testing depending on a result of the comparison. The reaction may be a reaction of the user or of the apparatus that is validated against the expected result to create a transparent test report.

The test case may be defined depending on at least one control signal for the at least partially autonomous apparatus or a component thereof, or depending on at least one sensor signal, in particular an audio signal, a video signal, a radar sensor signal, an ultrasonic sensor signal or a time of flight sensor signal.

The selecting arrangement may be adapted to determine a plurality of test cases depending on a probabilistic network or computational intelligence representing the model.

A corresponding method for testing an apparatus or a behavior of a user at an apparatus, comprises determining a scenario for testing depending on a probability defined for the scenario in a probability distribution, determining a test case depending on the scenario and depending on information about the apparatus, determining an output for the apparatus depending on the test case, detecting a response to the test case at the apparatus and determining a result of the testing depending on the response.

The method preferably comprises selecting a context for the test case from a plurality of contexts defined by the scenario.

At least one context for the scenario may be selected from a plurality of contexts depending on a model and an action defined by the model may be determined for the at least one context.

The probability distribution can indicate relevancies of scenarios for testing principles, and the method may comprise receiving information about a principle and selecting a scenario from a plurality of scenarios depending on the probability defined for the scenario in the probability distribution for the plurality of scenarios.

Preferably, a context of the test case is output, a reaction at the apparatus is observed, the reaction at the apparatus is compared with the actions defined in the test case, and the result of the testing is output depending on a result of the comparison.

A plurality of test cases may be determined depending on a probabilistic network or computational intelligence representing the model.

Further advantageous aspects are derivable from the following description and the drawings. In the drawings
- Fig. 1: depicts a device for testing an apparatus or a component or an operator thereof,
- Fig. 2: schematically depicts aspects of a device for testing an apparatus,
- Fig. 3: schematically depicts steps in a method for testing,
- Fig. 4: depicts scenarios and their correlation to situations and to a system under test.

The term model refers to a model that is defined by expert knowledge or has been determined using self-learning, e.g. from labelled data. The model as described in the following contains a mapping of test cases to principles that shall be tested. The model may be a probabilistic network or computational intelligence. The model may comprise a Bayesian network. Fuzzy logic type I or type II or a machine learning system may be used to implement the model as well. Mapping the Bayesian network to a multi-layer feedforward neural network, conditional probabilities of the Bayesian network may be defined by the Bayesian network. A probability distribution may be determined from the Bayesian network model by an analysis of the structure of the network. The model may be based on fuzzy logic (type I or type II) or model dependencies of test cases using Petri nets or similar state based modelling approaches. With such dependencies, experts may define a transparent mapping in the model by rules and assumed or generated probabilities.

Bayesian networks are an example for implementing the model, in particular to model conditional probabilities in a probability distribution. Other methods such as deep neural networks may be used.

The term rule refers to machine-readable rules. These rules may be represented by decision trees, by formal logic or by fuzzy logic (type I or type II).

The term general condition refers to conditions that apply to the rules. The general conditions may be implemented in machine-readable form, e.g. by MySQL or SPARQL.

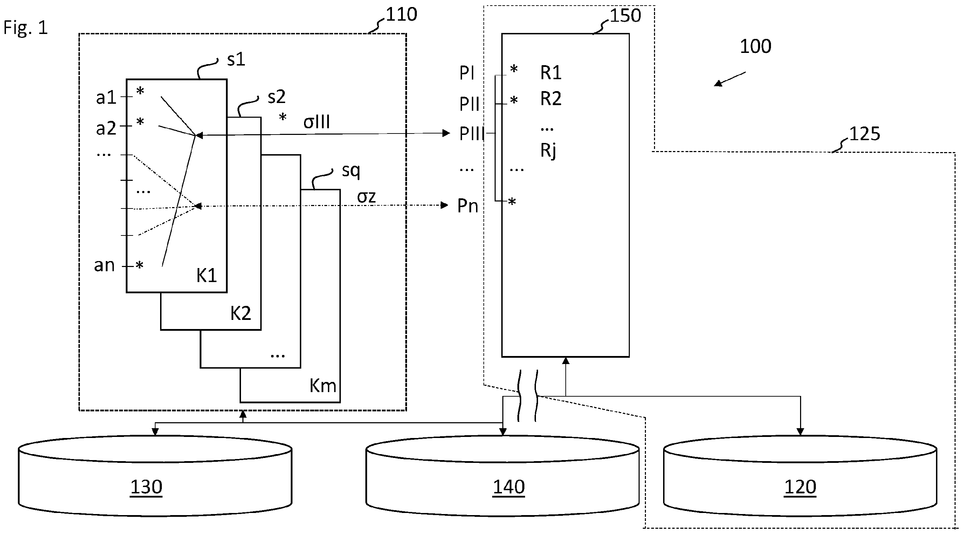

Figure 1 depicts a device 100 for testing an apparatus. The device is applicable for testing of a component of the apparatus or an operator of the apparatus as well. In the device, actions a1, ..., an and contexts K1, ..., Km define test cases. A test case * with actions a1, a2, ... an in context Km is depicted schematically in figure 1. For the test case * a probability σIII is depicted that indicates the relevance of the test case * for testing a principle PIII. In figure 1 a plurality of principles PI, ..., Pn are schematically depicted. Also depicted in figure 1 is another probability σz indicating the relevance of another test case in the context K1 for the principle Pn.

In an exemplary implementation, rules Ri firm up the principles PI, ..., Pn. In an example i = 120 rules may be used. The mapping of principles PI, ..., Pn to rules R1, ..., Ri may be implemented in a multidimensional network, e.g. a lookup table where x indicates a Rule that firms up a certain principle:

| | PI, | PII, | ..., | Pn |
|---|---|---|---|---|
| R1 | x | x | | |
| R2 | | x | | x |
| ... | | | | |
| Ri | x | | | |

To test that a principle PI, ..., Pn is met, a plurality of the actions a1, ..., an may be applied in a plurality of contexts K1, ..., Km. To determine to which extend a certain principle is met, the correlation of actions, contexts and rules is evaluated. The correlation is represented by probabilities σI, ..., σz linking actions, contexts and probabilities to principles.

The actions and contexts are mapped to the probabilities in the model. The model is depicted in figure 1 with reference sign 110. A Bayesian network {aj, σj, kj} may represent the model, where j is an index for a link to a particular principle Pj. The Bayesian network may be trained based on test cases e.g. by a training method for artificial neural networks. Test cases for the training are for example determined depending on a rule-based model 120, for instance a fuzzy set model (type I or type II), and/or depending on a relational database 150 or a case-based reasoning data-base 130. The test cases may be stored in the case-based reasoning data-base 130 or a relational data base 140 as well. The test cases * are for example stored with and accessible by an index.

The mapping of contexts K1, ..., Km and actions a1, ..., an to test cases * may be implemented in a lookup table:

| | a1, | | a2, | ... , | an |
|---|---|---|---|---|---|
| K1 | *11 | *12 | | *1n | |
| K2 | *21 | *22 | | *2n | |
| ... | | | | | |
| Km | *m1 | *m2 | | *mn | |

By way of example, a rule Rj concretizes a principle Pj as follows:
Pj: "Child at the side of the road could step onto the lane unexpectedly, therefore exercise maximum diligence".
Rj: "IF child at side of road THEN drive slowly".

Preferably, the rational database 150 and the rule-based model 120 are a predefined set of fundament principals manually created based on legal and ethical aspects. They form a basis against which the apparatus 160 or the user thereof has to be tested. The rational database 150 and the rule-based model 120 may be merged to a to a relational database 125 which contains principles Pj and corresponding action rules Rj.

The case-based reasoning data-base 130 in this example contains an amount x of video data Rjx for different contexts Kx of the contexts K1, ..., Km. The contexts are e.g. video data of different children, a group of children, holding the hand of an adult, with a bicycle, in summer, in snow, in dim light.

The relational data-base 140 in this example contains labelled test cases, e.g. the video data with the corresponding label. A human may label the video data appropriately.

In this example, the conditional probability σj provides a statement for the corresponding actions aj and context Kj. In other words, the conditional probability σj provides the probability for violating the principle Pj in different context Kj of the contexts K1, ... Km. The context Kj may for example define "summer in Arizona", "winter in the Black Forrest".

In the example, the principle Pj is the index for the corresponding rules from the table above. In other words, the rules Ri for the principle Pj are determined from the table. And the test case, i.e. the action ai and the context Ki are determined depending on the rule Ri.

For complex scenarios, a plurality of actions and contexts may be required to cover the principles Pi. The rules Ri with a high probability σi may be used to define the complex scenarios. For example the actions "A Child standing at the side of the road" is combined with one or more of the contexts "in winter", "in summer", "in twilight", "at night", "in the rain" or a combination thereof.

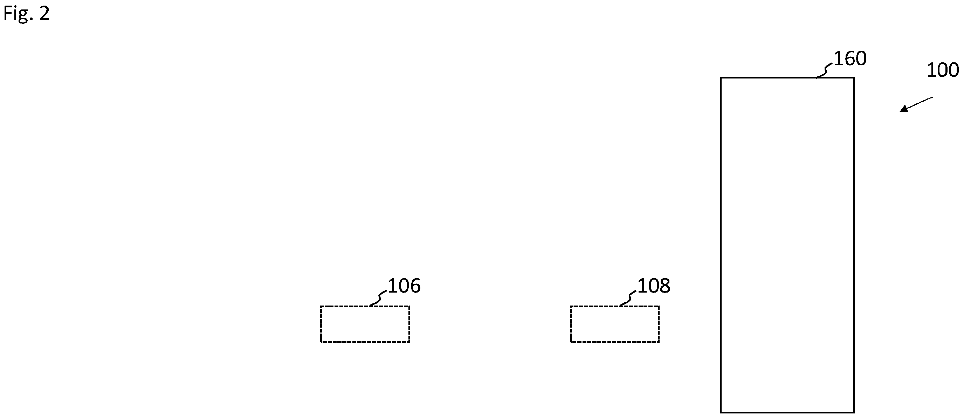

The test cases * are applied for example at an at least partially autonomous apparatus 160 for testing. The device 100 for testing at the at least partially autonomous apparatus 160 is depicted in figure 2.

The device 100 may comprise a selecting arrangement 106 and a testing arrangement 108.

The relational database 150 contains principles Pj and is linked to the corresponding action rule Rj in the rule-based model 120. For those, rules and principles have to be defined in the model 110.

The task of the modelling arrangement 110 is to link those fundamental rules with action a1, ..., an, context K1, ..., Km and likelihoods σ1, ..., σz which are related to executable test cases, e.g. video sequences, Radar or Lidar data sequences in the case-based reasoning data-base 130 and/or the relational data-base 140.

The data structure of the model 110 is for example a set of links which can be in the form a matrix, a Rule-tree, e.g. according to fuzzy logic type II, or a net linking the multiple elements of the case-based reasoning data-base 130 and/or the relational data-base 140 with the principles.

A human operator may have connected the test cases and principals manually due to his knowledge.

Likewise, the case-based reasoning database 130 is be filled with multiple models of actions and with different contexts K1, ..., Km that can serve as test scenarios automatically.

For instance, the case-based reasoning database 130 comprises one particular scenario comprising a playing child in different appearances such as "in sunset", "in rain", "in snow".

A Bayesian net may link the database structure of the relational database 140 as well as the relational database 150 and the rule-based model 120.

The databases may be structured in actions and contexts that have relations to principles and rules. In an exemplary approach, the relation database 140 is provided with labeled scenarios. For instance, the relation database 140 has been manually pre-structured according to principles and an action description.

E.g., a video sequence for an action a1 is assigned "a child playing on the road"; a video sequence for an action a2 is assigned "a child behind a car". Other actions may be assigned alike.

When labels are used in the database, scenarios these relate to scenarios and principles of the rational database 150 and the rule-based model 120.

The model 110 in the example correlates actions a1, ..., an in contexts K1, ..., Km with the probability distribution σ1, ..., σz indicating the relevance of the actions a1, ..., an in the contexts K1, ..., Km regarding test cases for testing whether the apparatus 160 operates according to a principle PI, ..., Pn or not.

The model 110 in the example defines an individual probability for an action in a context. In the example, the model 110 defines individual probabilities σ1, ..., σz for the same action in different contexts.

The model 110 is in one aspect created and implemented by indexing between PI, ..., Pn, a1, ... an, K1, ..., Km and σ1, ..., oz.

The model 110 relates to test cases in the case-based reasoning database 130 and the relational database 140, e.g. to video and other test data stored therein. The case-based reasoning database 130 and the relational database 140 are examples for databases, which contain executable test sequences in form of videos, Lidar, or Radar data sets, which are clearly labeled.

The selecting arrangement 106 may be adapted to determine the test case * depending on a result of a comparison of at least one individual probability σ1, ..., σz with a threshold or with at least one other individual probability σ1, ..., oz. In particular the test case with the comparably higher probability or with the highest of all probabilities is selected. By way of example, when the probability σIII=99% and the probability σz=3%, the test case with the probability σIII is used for testing.

The selecting arrangement 106 may be adapted to provide the test case for testing or not depending on the result of an overlay of a context for the test case with at least one general condition for the principle PI, ..., Pn.

The selecting arrangement 106 may be adapted to provide the test case for testing or not depending on the result of a correlation analysis of the model 110.

The selecting arrangement 106 is in one aspect adapted to determine a plurality of test cases, for testing whether the apparatus 160 operates according to a principle or not, from actions and contexts for the apparatus depending on a reference rule. The selecting arrangement 106 is in one aspect adapted to determine the plurality of test cases depending on a probabilistic network or computational intelligence. The term probabilistic network refers to a probabilistic inference computation that is based e.g. on a Bayesian network representing the model 110. The term computational intelligence refers to a computation that is based on fuzzy logic type I or II, artificial neural networks or evolutionary computation representing the model 110.

The selecting arrangement 106 may be adapted to determine the plurality of test cases depending on input from the rule-based model 120, such as a fuzzy set model (type I or type II).

Alternatively, or additionally, the selecting arrangement 106 may be adapted to determine the plurality of test cases depending on input from the case-based reasoning database 130.

The selecting arrangement 106 may be adapted to determine the test case * depending on the Bayesian network representing the model 110.

In another aspect, the selecting arrangement 106 is adapted to determine the test case * from the plurality of test cases depending on the probability distribution σ1, ..., σz.

The testing arrangement 108 is adapted to provide the test case * for testing at the apparatus 160. The testing arrangement 108 is adapted to determine a result of the testing.

The test case is for example defined depending on at least one control signal for the apparatus 160 or a component thereof. The test case may additionally or alternatively be defined depending on at least one sensor signal, in particular an audio signal, a video signal, a radar sensor signal, an ultrasonic sensor signal or a time of flight sensor signal.

Exemplary test cases for testing an at least partial autonomous vehicle may include a video signal indicating an action wherein a person at a side of a road is moving into a lane of a road. In this case a plurality of contexts may be defined by different environmental properties, e.g. illumination of the scenario at a day time, night time or at dawn. Likewise, different obstacles hiding the person at least partially may be arranged in the video signal at different locations for different contexts.

For these test cases, a general rule may be defined, in particular by expert knowledge, indicating different reactions that are expected for different contexts of a scenario. For example, the general rule "WHEN detecting a person at a side of a road THEN reduce speed" may be defined. Other more specific rules such as correlations of several rules or rules that reduce a parameter space may be defined as well.

Exemplary test cases for testing the at least partial autonomous vehicle may include another video signal indicating a traffic sign at different scenarios. Additionally, to different illumination of the scenario the traffic sign may be at least partially obfuscated by snow or trees in different contexts.

An exemplary rule for these test cases may be a general rule "WHEN detecting that an object is obfuscated at least partially THEN detect the object by its geometry".

For testing, the test case defines at least on action and context of a scenario for the testing. The testing arrangement 108 is adapted to provide the context for the testing. The testing arrangement 108 is adapted to determine a result of the testing depending on a comparison between the action and the reaction.

The testing arrangement 108 may be adapted to capture the reaction at the apparatus.

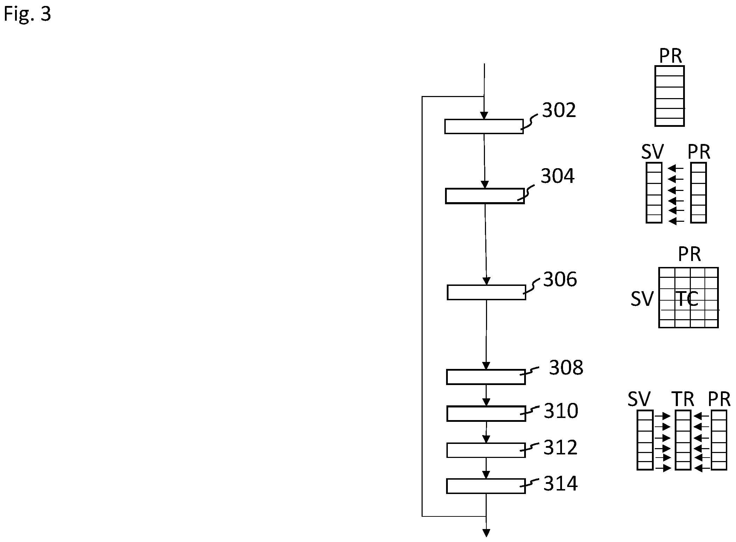

A method for testing at an at least partially autonomous apparatus 160 is described with reference to figure 3.

The method is suitable for testing the at least partially autonomous apparatus 160 or for testing a behavior of a user at the at least partially autonomous apparatus 160.

The method in the example comprises a step 302 of receiving information about at least one principle PI, ..., Pn that shall be tested. The principle PI, ..., Pn that shall be tested may result from an user input. The input may be coded as a principle vector PR.

Afterwards a step 304 is executed.

In step 304, a scenario for testing is determined depending on a probability defined for the scenario in the probability distribution σ1, ..., σz.

The probability distribution σ1, ..., σz in the example indicates relevancies of scenarios s1, ..., sq for testing principles PI, ..., Pn. A scenario is selected from the plurality of scenarios s1, ..., sq depending on the probability defined for the scenario in the probability distribution σ1, ..., σz for the plurality of scenarios s1, ..., sq. The selected scenario is in the example represented by a scenario vector SV. In the example, one scenario or more scenarios are selected that are relevant for testing the at least one principle PI, ..., Pn that shall be tested.

The step 304 may comprise determining the test case * depending on a result of a comparison of at least one individual probability σ1, σz with a threshold or with at least one other individual probability σ1, oz.

Step 304 may comprise determining at least one context for the scenario from the plurality of contexts K1, ..., Km depending on the model 110 and to determining an action defined by the model 110 for the at least one context.

The model 110 has been previously trained or defined depending on expert knowledge. In one example, the model 110 is represented by the Bayesian network. The model 110 may be self-learned as well.

In an exemplary model 110, a linear Eigenspace of scenario vectors SV defines the plurality of scenarios s1, ..., sq.

The scenario vector SV in the example defines a rule for correlating actions a1, ..., an and contexts K1, ..., Km.

Afterwards a step 306 is executed.

In step 306 a test case * is determined depending on the scenario and depending on information about the at least partial autonomous apparatus 160.

Step 306 may comprise selecting a context for the test case * from the plurality of contexts K1, ..., Km defined by the scenario. The general rule may be selected to define for a test case * how the at least partially autonomous apparatus 160 should react to an action and a context. Potential reactions for a car include e.g. braking when a person is detected in front of the car. A risk assignment of scenario vectors, SV, with an artificial neural network, a fuzzy logic or a Bayesian networks may be based on probability and impact factors. For example, sun and rain together result in a low probability but high impact.

The input for selecting the context for the test case * is for example the scenario vector, SV. The input may comprise laws and human expertise.

The test case * is for example determined from a risk matrix mapping scenario vectors, SV, and principles, PR, to test cases TC by a risk evaluation for the combinations thereof.

The test case * may be defined depending on at least one control signal for the at least partially autonomous apparatus 160 or a component thereof. The test case * may be defined depending on at least one sensor signal, in particular an audio signal, a video signal, a radar sensor signal, an ultrasonic sensor signal or a time of flight sensor signal.

The test case * that is selected, may be selected based on the information about the at least partially autonomous apparatus 160 or a component thereof.

A test case may be selected for testing or not depending on the result of a correlation analysis of correlations between the actions a1, ..., an in the contexts K1, ..., Km and their relevance as test cases based on the model 110.

The input for the selecting arrangement 106 in the example is a risk matrix mapping scenario vectors, SV, and principles PR to test cases TC according to the risk evaluation.

In one aspect, an applicability of scenarios to the apparatus 160 or to an architecture or structure of the apparatus 160 are evaluated, and appropriate test cases are identified. E.g., a test for a dynamic change is identified for a component change instead of a full system test.

Preferable a minimum effective matrix for the test cases TC is evaluated.

Afterwards a step 308 is executed.

In the step 308, an output is determined for the apparatus 160 depending on the test case *. In the example, the step 308 comprises outputting the action and the context of the test case *.

In step 308, the test case is executed, preferably with the goal of transparency of the results reporting.

For example, the test case * is executed as defined for this test case * in the matrix for the test case TC.

Preferably, test cases from the test cases TC in the matrix are applied to the at least partially autonomous apparatus 160 or a subsystem thereof.

Afterwards a step 310 is executed.

In the step 310, the response to the test case * is detected at the apparatus 160. In the example, a reaction is observed at the apparatus 160.

Afterwards a step 312 is executed.

In the step 312, a result of the testing is determined depending on the response. In the example, the reaction at the apparatus 160 is compared with the general rule defined for the test case *.

Afterwards a step 314 is executed.

In the step 314, a result of the testing is output. In the example, the result of the testing is output depending on a result of the comparison. The results may be determined and reported in an intelligible way, to make artificial intelligence and machine learning behaviors transparent e.g. to engineers, safety experts, policy makers.

Afterwards the method ends or continues for further testing with step 302. By repeating these steps, preferably a plurality of test cases is determined. Preferably a plurality of test cases is determined according to a selection goal. The selection goal is for example achieved when effective test strategies are selected.

The test result may be an intelligible test and defect report including scenario vectors SV, test results, TR, and expected outcome defined by the test cases TC. The output may comprise the feedback to previous steps for supervised optimization.

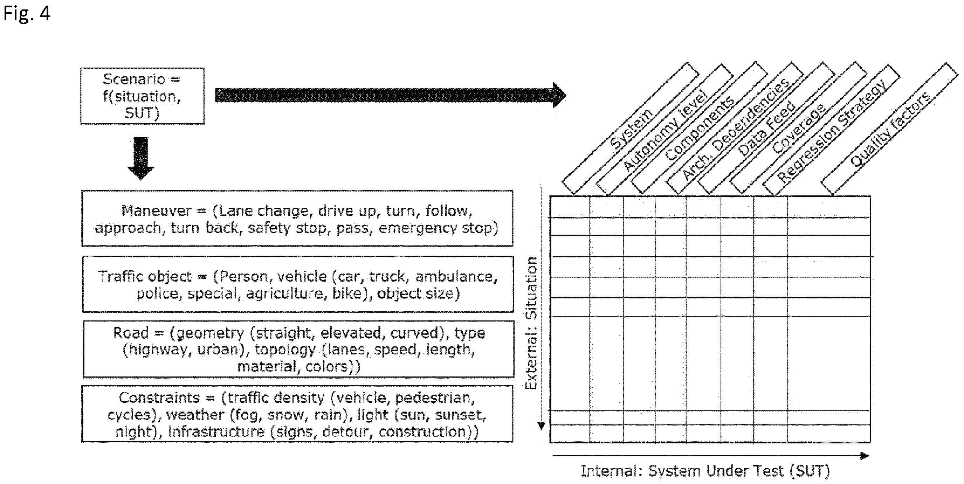

Exemplary scenarios for testing are depicted in figure 4. Figure 4 depicts the correlation of the scenarios to situations and to a system under test (SUT).

A test-scenario is in the example a multi-dimensional mapping of linear independent Eigen-Values of external situations, combined with a selection of internal parameters depending on a test strategy and architecture of the SUT. This means a scenario is a function f(situation, SUT). The test-scenarios may be represented by the linear independent Eigenspace of scenario vectors (SV).

In figure 4 the following internal parameters are depicted at columns of a two-dimensional exemplary representation of the multi-dimensional mapping:
System,
Autonomy level,
Components,
Arch. Dependencies,
Data Feed,
Coverage,
Regression Strategy,
Quality factors.

The following exemplary external situations are depicted in figure 4 by way of a knowledge graph syntax grouping selectable elements hierarchically, where one or more elements between a pair of parenthesis with the lowest hierarchical level of each example form a group comprising elements that are selectable individually as external situation to define the scenario:
Maneuver = (Lane change, drive up, turn, follow, approach, turn back, safety stop, pass, emergency stop);
Traffic object = (Person, vehicle (car, truck, ambulance, police, special agriculture, bike), object size);
Road = (geometry,(straight, elevated, curved), type(highway, urban), topology(lanes, speed, length, material, colors));
Constraints = (traffic density (vehicle, pedestrian, cycles), weather (fog, snow, rain), light (sun, sunset, night), infrastructure (signs, detour, constructions)).
A resulting scenario is synthesized in a signal or signals for testing the apparatus 160. Sensors at the apparatus 160 capture a response, i.e. reaction. The response may be used to learn a rule for actions or contexts depending on the leaves of the tree.

For testing the apparatus 160 or a component thereof, the apparatus 160 is presented actions in different contexts defined by the scenario. When the testing aims at validating that an operator of the apparatus 160 follows a certain rule, the apparatus 160 presents the operator with the actions in the contexts defined by the scenario and receives feedback from the operator.

This means that the device may be adapted for a dynamic validation, certification and homologation of the apparatus 160 in one aspect. In another aspect, the device may be adapted for testing and certifying an operator of the apparatus in particular for avoiding accidents.

## Claims

1. A device (100) for testing an at least partially autonomous apparatus (160) with sensors, comprising a selecting arrangement (106) adapted to determine a scenario for testing depending on a probability defined for the scenario in a probability distribution (σ1, ..., σz), and to determine a test case (*) depending on the scenario and depending on information about the apparatus (160), and a testing arrangement (108) adapted to determine an output for the apparatus (160) depending on the test case (*), detect a response to the test case (*) of the apparatus (160) and to determine a result of the testing depending on the response wherein the probability distribution (σ1, ..., σz) indicates relevancies of scenarios (s1, ..., sq) for testing principles (PI, ..., Pn), wherein the selecting arrangement (106) is adapted to receive information about a principle and to select a scenario from a plurality of scenarios (s1, ..., sq) depending on the probability defined for the scenario in the probability distribution (σ1, ..., σz) for the plurality of scenarios (s1, ..., sq), wherein the principles are defined by a legal framework or a general condition, wherein the scenario refers to a context that is combined with an action to form a concrete situation, wherein the test case refers to the action and the context for the action, wherein the testing arrangement (108) is adapted to compare in the test case a reaction of the apparatus to the test situation to a desired reaction to determine the result of the test,
wherein the selecting arrangement (106) is adapted to select the context for the test case (*) from a plurality of contexts (K1, ..., Km) defined by the scenario,
wherein the test case (*) is defined depending on at least one sensor signal of the sensor, including an audio signal, a video signal, a radar sensor signal, an ultrasonic sensor signal or a time of flight sensor signal,
wherein testing the sensor of the autonomous apparatus is not selected for those conditions which have no significant effect on the tested sensor signal,
wherein a resulting scenario is synthesized in a signal or signals for testing the autonomous apparatus (160),
wherein sensors at the autonomous apparatus (160) capture a response, which is a reaction.

2. The device according to claim 1, **characterized in that** the selecting arrangement (106) is adapted to determine at least one context for the scenario from a plurality of contexts (K1, ..., Km) depending on a model (110) and to determine an action defined by the model (110) for the at least one context.

3. The device (100) according to one of the previous claims, **characterized in that** the testing arrangement (108) is adapted to output a context of the test case (*), to observe a reaction at the apparatus (160), to compare the reaction at the apparatus (160) with the actions defined in the test case (*), and to output the result of the testing depending on a result of the comparison.

4. The device (100) according to one of the previous claims, **characterized in that** the selecting arrangement (106) is adapted to determine a plurality of test cases depending on a probabilistic network or computational intelligence representing the model (110) .

5. A method for testing an at least partially autonomous apparatus (160) with sensors, comprising determining (304) a scenario for testing depending on a probability defined for the scenario in a probability distribution (σ1, ..., σz), determining (306) a test case (*) depending on the scenario and depending on information about the at least partial autonomous apparatus (160), determining (308) an output for the at least partially autonomous apparatus (160) depending on the test case (*), detecting (310) a response to the test case (*) of the at least partially autonomous apparatus (160) and determining (312) a result of the testing depending on the response, wherein the probability distribution (σ1, ..., σz) indicates relevancies of scenarios (s1, ..., sq) for testing principles (PI, ..., Pn), and in by receiving (302) information about a principle and to select a scenario from a plurality of scenarios (s1, ..., sq) depending on the probability defined for the scenario in the probability distribution (σ1, ..., σz) for the plurality of scenarios (s1, ..., sq), wherein the principles are defined by a legal framework or a general condition, wherein the scenario refers to a context that is combined with an action to form a concrete situation, wherein the test case refers to the action and the context for the action, wherein in the test case a reaction of the apparatus to the test situation is compared to a desired reaction to determine the result of the test, wherein the method comprises selecting (306) a context for the test case (*) from a plurality of contexts (K1, ..., Km) defined by the scenario,
wherein the test case (*) is defined depending on at least one sensor signal, including an audio signal, a video signal, a radar sensor signal, an ultrasonic sensor signal or a time of flight sensor signal
wherein a resulting scenario is synthesized in a signal or signals for testing the autonomous apparatus (160),
wherein sensors at the autonomous apparatus (160) capture a response, which is a reaction.

6. The method according to claim 5, **characterized by** determining (304) at least one context for the scenario from a plurality of contexts (K1, ..., Km) depending on a model (110) and determining an action defined by the model (110) for the at least one context.

7. The method according to one of claims 5 to 6, **characterized by** outputting (308) a context of the test case (*), to observe (310) a reaction at the apparatus (160), to compare (312) the reaction at the apparatus (160) with the actions defined in the test case (*), and outputting (314) the result of the testing depending on a result of the comparison.

8. The method according to one of claims 5 to 7, **characterized by** determining (306) a plurality of test cases depending on a probabilistic network or computational intelligence representing the model (110) .

## Patentansprüche

1. Vorrichtung (100) zum Testen einer mindestens teilweise autonomen Einrichtung (160) mit Sensoren, umfassend eine Auswahlanordnung (106), die angepasst ist, um ein Szenario zum Testen abhängig von einer Wahrscheinlichkeit zu bestimmen, die für das Szenario in einer Wahrscheinlichkeitsverteilung (σ1, ..., oz) definiert ist, und um einen Testfall (*) abhängig von dem Szenario und abhängig von Informationen über die Einrichtung (160) zu bestimmen, und eine Testanordnung (108), die angepasst ist, um eine Ausgabe für die Einrichtung (160) abhängig von dem Testfall (*) zu bestimmen, eine Antwort auf den Testfall (*) der Einrichtung (160) zu erkennen und um ein Ergebnis des Testens abhängig von der Antwort zu bestimmen, wobei die Wahrscheinlichkeitsverteilung (σ1, ..., oz) Relevanzen von Szenarien (s1, ..., sq) zum Testen von Prinzipien (PI, ..., Pn) angibt, wobei die Auswahlanordnung (106) angepasst ist, um Informationen über ein Prinzip zu empfangen und um ein Szenario aus einer Vielzahl von Szenarien (s1, ..., sq) abhängig von der Wahrscheinlichkeit auszuwählen, die für das Szenario in der Wahrscheinlichkeitsverteilung (σ1, ..., oz) für die Vielzahl von Szenarien (s1, ..., sq) definiert ist, wobei die Prinzipien durch einen rechtlichen Rahmen oder eine allgemeine Bedingung definiert sind, wobei das Szenario auf einen Kontext Bezug nimmt, der mit einer Aktion kombiniert ist, um eine konkrete Situation zu bilden, wobei der Testfall auf die Aktion und den Kontext für die Aktion Bezug nimmt, wobei die Testanordnung (108) angepasst ist, um in dem Testfall eine Reaktion der Einrichtung auf die Testsituation mit einer gewünschten Reaktion zu vergleichen, um das Ergebnis des Tests zu bestimmen,
wobei die Auswahlanordnung (106) angepasst ist, um den Kontext für den Testfall (*) aus einer Vielzahl von Kontexten (K1, ..., Km), die durch das Szenario definiert sind, auszuwählen,
wobei der Testfall (*) abhängig von mindestens einem Sensorsignal des Sensors, einschließlich eines Audiosignals, eines Videosignals, eines Radarsensorsignals, eines Ultraschallsensorsignals oder eines Laufzeitsensorsignal, definiert wird,
wobei das Testen des Sensors der autonomen Einrichtung nicht für diejenigen Bedingungen ausgewählt wird, die keine signifikante Wirkung auf das getestete Sensorsignal haben,
wobei ein resultierendes Szenario in einem Signal oder Signalen zum Testen der autonomen Einrichtung (160) synthetisiert wird,
wobei Sensoren an der autonomen Einrichtung (160) eine Antwort erfassen, die eine Reaktion ist.

2. Vorrichtung nach Anspruch 1, **dadurch gekennzeichnet, dass** die Auswahlanordnung (106) angepasst ist, um mindestens einen Kontext für das Szenario aus einer Vielzahl von Kontexten (K1, ..., Km) abhängig von einem Modell (110) zu bestimmen und um eine Aktion, die durch das Modell (110) definiert ist, für mindestens einen Kontext zu bestimmen.

3. Vorrichtung (100) nach einem der vorstehenden Ansprüche,
**dadurch gekennzeichnet, dass** die Testanordnung (108) angepasst ist, um einen Kontext des Testfalls (*) auszugeben, um eine Reaktion an der Einrichtung (160) zu beobachten, um die Reaktion an der Einrichtung (160) mit den in dem Testfall (*) definierten Aktionen zu vergleichen und um das Ergebnis des Testens abhängig von einem Ergebnis des Vergleichs auszugeben.

4. Vorrichtung (100) nach einem der vorstehenden Ansprüche,
**dadurch gekennzeichnet, dass** die Auswahlanordnung (106) angepasst ist, um eine Vielzahl von Testfällen abhängig von einem probabilistischen Netzwerk oder einer rechnerischen Intelligenz zu bestimmen, die das Modell (110) darstellt.

5. Verfahren zum Testen einer mindestens teilweise autonomen Einrichtung (160) mit Sensoren, umfassend das Bestimmen (304) eines Szenarios zum Testen abhängig von einer Wahrscheinlichkeit, die für das Szenario in einer Wahrscheinlichkeitsverteilung (σ1, ..., σz) definiert ist, das Bestimmen (306) eines Testfalls (*) abhängig von dem Szenario und abhängig von Informationen über die mindestens teilweise autonome Einrichtung (160), das Bestimmen (308) einer Ausgabe für die mindestens teilweise autonome Einrichtung (160) abhängig von dem Testfall (*), das Erkennen (310) einer Antwort auf den Testfall (*) der mindestens teilweise autonomen Einrichtung (160) und das Bestimmen (312) eines Ergebnisses des Testens abhängig von der Antwort, wobei die Wahrscheinlichkeitsverteilung (σ1, ..., oz) Relevanzen von Szenarien (s1, ..., sq) zum Testen von Prinzipien (PI, ..., Pn) angibt, und durch Empfangen (302) von Informationen über ein Prinzip und um ein Szenario aus einer Vielzahl von Szenarien (s1, ..., sq) abhängig von der Wahrscheinlichkeit, die für das Szenario in der Wahrscheinlichkeitsverteilung (σ1, ..., oz) für die Vielzahl von Szenarien (s1, ..., sq) definiert ist, auszuwählen, wobei die Prinzipien durch einen rechtlichen Rahmen oder eine allgemeine Bedingung definiert sind, wobei das Szenario auf einen Kontext Bezug nimmt, der mit einer Aktion kombiniert ist, um eine konkrete Situation zu bilden, wobei der Testfall auf die Aktion und den Kontext für die Aktion Bezug nimmt, wobei in dem Testfall eine Reaktion der Einrichtung auf die Testsituation mit einer gewünschten Reaktion verglichen wird, um das Ergebnis des Tests zu bestimmen, wobei das Verfahren das Auswählen (306) eines Kontexts für den Testfall (*) aus einer Vielzahl von Kontexten (K1, ..., Km) umfasst, die durch das Szenario definiert sind,
wobei der Testfall (*) abhängig von mindestens einem Sensorsignal, einschließlich eines Audiosignals, eines Videosignals, eines Radarsensorsignals, eines Ultraschallsensorsignals oder Laufzeitsensorsignal, definiert wird, wobei ein resultierendes Szenario in einem Signal oder Signalen zum Testen der autonomen Einrichtung (160) synthetisiert wird, wobei Sensoren an der autonomen Einrichtung (160) eine Antwort erfassen, die eine Reaktion ist.

6. Verfahren nach Anspruch 5, **gekennzeichnet durch,** das Bestimmen (304) mindestens eines Kontexts für das Szenario aus einer Vielzahl von Kontexten (K1, ..., Km) abhängig von einem Modell (110) und das Bestimmen einer Aktion, die durch das Modell (110) definiert ist, für den mindestens einen Kontext.

7. Verfahren nach einem der Ansprüche 5 bis 6, **gekennzeichnet durch,** das Ausgeben (308) eines Kontexts des Testfalls (*), um eine Reaktion an der Einrichtung (160) zu beobachten (310), um die Reaktion an der Einrichtung (160) mit den Aktionen, die in dem Testfall (*) definiert sind, zu vergleichen (312), und Ausgeben (314) des Ergebnisses des Testens abhängig von einem Ergebnis des Vergleichs.

8. Verfahren nach einem der Ansprüche 5 bis 7, **gekennzeichnet durch,** das Bestimmen (306) einer Vielzahl von Testfällen abhängig von einem probabilistischen Netzwerk oder einer rechnerischen Intelligenz, die das Modell (110) darstellt.

## Revendications

1. Dispositif (100) pour tester un appareil (160) au moins partiellement autonome avec des capteurs, comprenant une disposition de sélection (106) adaptée pour déterminer un scénario à tester en fonction d'une probabilité définie pour le scénario dans une distribution de probabilités (σ1, ... , σz), et pour déterminer un cas de test (*) en fonction du scénario et en fonction des informations concernant l'appareil (160), et une disposition de test (108) adaptée pour déterminer une sortie pour l'appareil (160) en fonction du cas de test (*), détecter une réponse au cas de test (*) de l'appareil (160) et pour déterminer un résultat du test en fonction de la réponse, dans lequel la distribution de probabilités (σ1, ..., σz) indique les pertinences des scénarios (s1, ... , sq) pour tester des principes (PI, ..., Pn), dans lequel la disposition de sélection (106) est adaptée pour recevoir des informations sur un principe et pour sélectionner un scénario à partir d'une pluralité de scénarios (s1, ..., sq) en fonction de la probabilité définie pour le scénario dans la distribution de probabilités (σ1, ' σz) pour la pluralité de scénarios (s1, ..., sq), dans lequel les principes sont définis par un cadre juridique ou une condition générale, dans lequel le scénario se réfère à un contexte qui est combiné avec une action pour former une situation concrète, dans lequel le cas de test se réfère à l'action et au contexte de l'action, dans lequel la disposition de test (108) est adaptée pour comparer dans le cas de test une réaction de l'appareil à la situation de test à une réaction souhaitée pour déterminer le résultat du test,
dans lequel la disposition de sélection (106) est adaptée pour sélectionner le contexte du cas de test (*) à partir d'une pluralité de contextes (K1, ..., Km) définis par le scénario,
dans lequel le cas de test (*) est défini en fonction d'au moins un signal de capteur du capteur, incluant un signal audio, un signal vidéo, un signal de capteur radar, un signal de capteur à ultrason ou un signal de capteur de temps de vol,
dans lequel le test du capteur de l'appareil autonome n'est pas sélectionné pour ces conditions qui n'ont pas d'effet significatif sur le signal du capteur testé, dans lequel un scénario résultant est synthétisé dans un signal ou des signaux pour le test de l'appareil (160) autonome,
dans lequel les capteurs de l'appareil (160) autonome capturent une réponse, qui est une réaction.

2. Dispositif selon la revendication 1, **caractérisé en ce que** la disposition de sélection (106) est adaptée pour déterminer au moins un contexte pour le scénario à partir d'une pluralité de contextes (K1, ..., Km) en fonction d'un modèle (110) et pour déterminer une action définie par le modèle (110) pour le au moins un contexte.

3. Dispositif (100) selon l'une quelconque des revendications précédentes, **caractérisé en ce que** la disposition de test (108) est adaptée pour produire un contexte du cas de test (*), pour observer une réaction au niveau de l'appareil (160), pour comparer la réaction au niveau de l'appareil (160) avec les actions définies dans le cas de test (*), et pour produire le résultat du test en fonction d'un résultat de la comparaison.

4. Dispositif (100) selon l'une quelconque des revendications précédentes, **caractérisé en ce que** la disposition de sélection (106) est adaptée pour déterminer une pluralité de cas de test en fonction d'un réseau probabiliste ou d'une intelligence computationnelle représentant le modèle (110) .

5. Procédé pour tester un appareil (160) au moins partiellement autonome avec des capteurs, comprenant la détermination (304) d'un scénario à tester en fonction d'une probabilité définie pour le scénario dans une distribution de probabilités (σ1, ..., σz), la détermination (306) d'un cas de test (*) en fonction du scénario et en fonction des informations concernant l'appareil (160) au moins partiellement autonome, la détermination (308) d'une sortie pour l'appareil (160) au moins partiellement autonome en fonction du cas de test (*), la détection (310) d'une réponse au cas de test (*) de l'appareil (160) au moins partiellement autonome et la détermination (312) d'un résultat du test en fonction de la réponse, dans lequel la distribution de probabilités (σ1, ..., σz) indique la pertinence des scénarios (s1, ..., sq) pour tester les principes (PI, ..., Pn), et en recevant (302) des informations sur un principe et pour sélectionner un scénario à partir d'une pluralité de scénarios (s1, ..., sq) en fonction de la probabilité définie pour le scénario dans la distribution de probabilités (σ1, ... , σz) pour la pluralité de scénarios (s1, ..., sq), dans lequel les principes sont définis par un cadre juridique ou une condition générale, dans lequel le scénario se réfère à un contexte qui est combiné avec une action pour former une situation concrète, dans lequel le cas de test se réfère à l'action et au contexte de l'action, dans lequel dans le cas de test une réaction de l'appareil à la situation de test est comparée à une réaction souhaitée pour déterminer le résultat du test, dans lequel le procédé comprend la sélection (306) d'un contexte pour le cas de test (*) à partir d'une pluralité de contextes (K1, ..., Km) définis par le scénario,
dans lequel le cas de test (*) est défini en fonction d'au moins un signal de capteur, incluant un signal audio, un signal vidéo, un signal de capteur radar, un signal de capteur à ultrason ou un signal de capteur de temps de vol,
dans lequel un scénario résultant est synthétisé dans un signal ou des signaux pour tester l'appareil (160) autonome,
dans lequel les capteurs de l'appareil (160) autonome capturent une réponse, qui est une réaction.

6. Procédé selon la revendication 5, **caractérisé par** la détermination (304) d'au moins un contexte pour le scénario à partir d'une pluralité de contextes (K1, ..., Km) en fonction d'un modèle (110) et la détermination d'une action définie par le modèle (110) pour le au moins un contexte.

7. Procédé selon l'une quelconque des revendications 5 à 6, **caractérisé par** la production (308) d'un contexte du cas de test (*), l'observation (310) d'une réaction au niveau de l'appareil (160), la comparaison (312) de la réaction au niveau de l'appareil (160) avec les actions définies dans le cas de test (*), et la production (314) du résultat du test en fonction d'un résultat de la comparaison.

8. Procédé selon l'une quelconque des revendications 5 à 7, **caractérisé par** la détermination (306) d'une pluralité de cas de test en fonction d'un réseau probabiliste ou d'une intelligence computationnelle représentant le modèle (110).
